# EUROPEAN PATENT SPECIFICATION

(11) **EP 3 346 185 B1**
(45) Date of publication and mention of the grant of the patent: **20.07.2022**
(21) Application number: 16841354.0
(22) Date of filing: 27.07.2016
(51) Int. Cl.: F22B 37/26, B01D 45/08, F01K 9/00, G21D 1/02, F22B 37/30

(54) **MOISTURE SEPARATOR AND STEAM TURBINE PLANT**
FEUCHTIGKEITSABSCHEIDER UND DAMPFTURBINENANLAGE
SÉPARATEUR D'HUMIDITÉ ET INSTALLATION DE TURBINE À VAPEUR

(30) Priority: 02.09.2015 JP 2015173045
(43) Date of publication of application: 11.07.2018
(73) Proprietor: MITSUBISHI HEAVY INDUSTRIES, LTD., Tokyo 100-8332 (JP)
(72) Inventor: FUJITA, Issaku, Yokohama-shi Kanagawa 220-8401 (JP); TAKAHASHI, Ryota, Yokohama-shi Kanagawa 220-8401 (JP); SHIMOHARA, Yasuaki, Yokohama-shi Kanagawa 220-8401 (JP); KADOWAKI, Mitsumasa, Yokohama-shi Kanagawa 220-8401 (JP)
(74) Representative: Hoffmann Eitle
(86) International application number: PCT/JP2016/072028
(87) International publication number: WO 2017/038322

(56) References cited:
- WO-A1-2014/112408
- JP-A- H06 137 508
- JP-A- 2009 062 902
- JP-A- 2009 195 854
- JP-A- 2012 063 119
- JP-A- 2012 255 643
- US-A- 3 713 278
- US-A- 4 717 400

## Description

### Field

The present invention relates to a moisture separator that removes moisture from steam, and to a steam turbine plant that has this moisture separator and is used in a nuclear power plant, a thermal power plant, or the like.

### Background

For example, a nuclear power plant generates electricity by feeding steam generated in a steam generator to a steam turbine, and driving a generator connected thereto. In general, the steam turbine is formed of a high pressure turbine and a low pressure turbine, and steam used in the high pressure turbine is fed to the low pressure turbine, after moisture is removed therefrom and the moisture-removed steam is heated by a moisture separator and reheater. The steam used in the steam turbine is turned into condensed water by being cooled in a condenser, and this condensed water is returned to the steam generator after being heated in a low pressure feed water heater or a high pressure feed water heater.

The high pressure turbine and the low pressure turbine have the moisture separator provided therebetween, and this moisture separator separates the moisture included in the steam discharged from the high pressure turbine, and feeds the moisture-separated steam to the low pressure turbine. Therefore, erosion is able to be prevented by decrease in wetness of the steam at the outlet of the low pressure turbine, and thermal efficiency of the plant is able to be improved. Examples of such a moisture separator include a moisture separator described in Japanese Unexamined Patent Application, Publication No. H06-137508.

Other examples of the prior art can be seen in documents JP 2012 255643 A and WO 2014/112408 A1.

### Summary

### Technical Problem

The steam that flows into the above described moisture separator is of a high-speed two-phase steam flow, and thus fluid oscillation may be caused when this steam of the high-speed two-phase steam flow is introduced inside the moisture separator. In the moisture separator described in the above cited Japanese Unexamined Patent Application, Publication No. H06-137508, steam of a high-speed two-phase steam flow is introduced into a moisture separating element after being baffled by a baffle plate, but occurrence of fluid oscillation is difficult to prevent because the flow velocity is unable to be reduced sufficiently just by the baffle plate. There is a problem that for the prevention of the occurrence of this fluid oscillation, strength of the body of the moisture separator must be increased, and this leads to increase in size of the apparatus and increase in the manufacturing cost.

The present invention solves the above described problem, and an object thereof is to provide a moisture separator and a steam turbine plant that are designed to be improved in their performance without the increase in their sizes and in their manufacturing cost.

### Solution to Problem

To achieve the above object, a moisture separator according to the present invention includes: a body that has a hollow shape and extends in a horizontal direction; a steam inlet portion that is provided in a longitudinally intermediate portion of the body; a manifold that is arranged with a predetermined gap from an inner wall surface of the body, communicates with the steam inlet portion, and has plural steam blowout portions provided along a longitudinal direction; a moisture separating portion that separates moisture from steam blown out from the plural steam blowout portions; and a steam outlet portion that is provided in the body, and discharges steam having had the moisture separated therefrom in the moisture separating portion and flowing along the inner wall surface of the body.

Therefore, the manifold having the plural steam blowout portions is arranged with the predetermined gap from the inner wall of the body, the steam inlet portion communicates with this manifold, and thus moisture in the steam introduced from the steam inlet portion to the manifold is separated by the moisture separating portion, after the steam is decreased in its flow velocity in this manifold and is blown out from the plural steam blowout portions. Accordingly, increase in the size of the body is able to be prevented, reinforcement of the body is not needed, increase in the manufacturing cost is able to be prevented, and the performance is able to be improved by efficient separation of moisture from the steam.

In the moisture separator according to the present invention, the body has a steam introducing chamber in the longitudinally intermediate portion; the steam inlet portion communicates with the steam introducing chamber; the manifold has a first manifold portion and a second manifold portion that are arranged at both sides of the steam introducing chamber in the longitudinal direction of the body; and one of longitudinal end portions of each of the first manifold portion and the second manifold portion communicates with the steam introducing chamber.

Therefore, the steam is introduced from the steam inlet portion into the steam introducing chamber, and is fed from the respective end portions to the first manifold portion and second manifold portion, and thus the steam is able to be substantially uniformly introduced into the manifold portions and stable moisture separating performance is able to be maintained.

In the moisture separator according to the present invention, a buffer member is provided opposite to the steam inlet portion in the steam introducing chamber.

Therefore, by colliding with the buffer member, the steam introduced into the steam introducing chamber from the steam inlet portion is fed to the first manifold portion and second manifold portion after a part of the moisture included therein is removed, and thus the moisture separating performance is able to be improved.

In the moisture separator according to the present invention, the body has a steam blowout chamber provided at a side nearer the plural steam blowout portions, and the moisture separating portion faces the steam blowout chamber.

Therefore, the steam blown out to the steam blowout chamber from the respective steam blowout portions of the first manifold portion and second manifold portion is supplied to the moisture separating portion facing the steam blowout chamber, and thus the amount of steam fed to the moisture separating portion is able to be uniformized and the moisture separating performance is able to be improved.

In the moisture separator according to the present invention, a baffle plate is provided in close contact with the moisture separating portion at the steam blowout chamber side of the moisture separating portion.

Therefore, moisture is removed from the steam as the steam passes through the moisture separating portion after being baffled by the baffle plate, and thus stable moisture separating performance is able to be maintained.

In the moisture separator according to the present invention, the moisture separating portion has a first moisture separating element and a second moisture separating element that are arranged opposite to each other at both sides of the steam blowout chamber in a width direction of the body.

Therefore, moisture is removed from the steam having been blown out to the steam blowout chamber from the respective steam blowout portions of the first manifold portion and second manifold portion, as the steam passes through each of the first moisture separating element and second moisture separating element facing the steam blowout chamber. Thus, moisture separation treatment is able to be carried out stably on a predetermined amount of steam.

In the moisture separator according to the present invention, the steam blowout chamber is provided with a first distribution member that distributes the steam blown out from the steam blowout portions, to the first moisture separating element and the second moisture separating element.

Therefore, the steam blown out to the steam blowout chamber from the respective steam blowout portions of the first manifold portion and second manifold portion is distributed by the first distribution member, to the first moisture separating element and the second moisture separating element and passes therethrough, and thus the amount of steam treated by the moisture separating elements is able to be uniformized and the moisture separation treatment is able to be carried out stably.

In the moisture separator according to the present invention, the steam inlet portion is provided at a lower portion of the body; as the steam outlet portion, a first steam outlet portion and a second steam outlet portion are provided so as to correspond to the first moisture separating element and the second moisture separating element; and a second distribution member is provided that distributes steam to the first steam outlet portion and the second steam outlet portion, the steam having had moisture removed therefrom by the first moisture separating element and the second moisture separating element.

Therefore, the steam from which the moisture has been removed by the first moisture separating element and the second moisture separating element is discharged by being distributed by the second distribution member to the first steam outlet portion and the second steam outlet portion, and thus decrease in the flow velocity of the steam inside the body is prevented by prevention of an uneven flow of the steam to one of the steam outlet portions, and the moisture separation treatment is able to be carried out stably.

In the moisture separator according to the present invention, the first steam outlet portion is provided at an upper portion of the body, and the second steam outlet portion is provided at a side portion of the body.

Therefore, by the provision of the first steam outlet portion at the upper portion of the body, and the provision of the second steam outlet portion at the side portion of the body, freedom of arrangement of the steam pipings connected to the respective steam outlet portions is improved, and optimum arrangement of the steam pipings is enabled.

In the moisture separator according to the present invention, the manifold has one end portion that is closed, and the other end portion communicating with the steam inlet portion; and the plural steam blowout portions are slit-shaped, and areas of openings of the plural steam blowout portions are set to increase toward the one end portion from the other end portion side.

Therefore, since the pressure of the steam decreases toward downstream in the manifold, by the increase in the areas of the openings of the steam blowout portions toward downstream in the flow directions of the steam, the amount of steam blown out from the steam blowout portions is able to be uniformized.

Further, a steam turbine plant according to the present invention includes a high pressure side turbine, a low pressure side turbine, and the moisture separator removing moisture from steam used in the high pressure side turbine and feeding the moisture-removed steam to the low pressure side turbine.

Therefore, increase in the manufacturing cost of the moisture separator is able to be prevented, and the performance is able to be improved by efficient removal of moisture from the steam.

### Advantageous Effects of Invention

In the moisture separator and the steam turbine plant of the present invention, since the manifold having a longitudinally intermediate portion communicating with the steam inlet portion and having the plural steam blowout portions provided along the longitudinal direction is arranged with a predetermined gap from the inner wall of the body having the steam inlet portion and the steam outlet portion provided therein, increase in their manufacturing cost is able to be prevented, and their performance is able to be improved by efficient separation of moisture from steam.

### Brief Description of Drawings

FIG. 1 is a schematic configuration diagram illustrating a moisture separator of a first embodiment.
FIG. 2 is a vertical sectional (a section along II-II in FIG. 1) view at a steam inlet portion in the moisture separator.
FIG. 3 is a vertical sectional (a section along III-III in FIG. 1) view at a moisture separating element in the moisture separator.
FIG. 4 is a plan view illustrating a steam turbine plant to which the moisture separator of the first embodiment has been applied.
FIG. 5 is a side view illustrating the steam turbine plant.
FIG. 6 is a vertical sectional view illustrating a modification of the moisture separator of the first embodiment.
FIG. 7 is a vertical sectional view illustrating a moisture separator of a second embodiment.
FIG. 8 is a plan view illustrating a steam turbine plant to which the moisture separator of the second embodiment has been applied.
FIG. 9 is a side view illustrating the steam turbine plant.
FIG. 10 is a vertical sectional view illustrating a moisture separator of a third embodiment.
FIG. 11 is a plan view illustrating a steam turbine plant to which the moisture separator of the third embodiment has been applied.
FIG. 12 is a side view illustrating the steam turbine plant.
FIG. 13 is a vertical sectional view illustrating a moisture separator of a fourth embodiment.
FIG. 14 is a vertical sectional view illustrating a moisture separator of a fifth embodiment.

### Description of Embodiments

Hereinafter, preferred embodiments of a moisture separator and a steam turbine plant according to the present invention will be described in detail by reference to the appended drawings. The present invention is not limited by these embodiments, and when there are plural embodiments, the present invention includes those configured by combination of any of these embodiments.

### [First Embodiment]

In a first embodiment, a steam turbine plant according to the present invention is applied to a nuclear power plant. The nuclear power plant generates electricity by feeding steam generated in a steam generator to a steam turbine and driving a generator connected thereto. The steam turbine is formed of a high and intermediate pressure turbine and a low pressure turbine. Steam used in a high pressure turbine portion is fed to an intermediate pressure turbine portion after moisture is removed therefrom by a high pressure moisture separator, and the steam used in the intermediate pressure turbine portion is fed to the low pressure turbine after moisture is removed therefrom by a low pressure moisture separator.

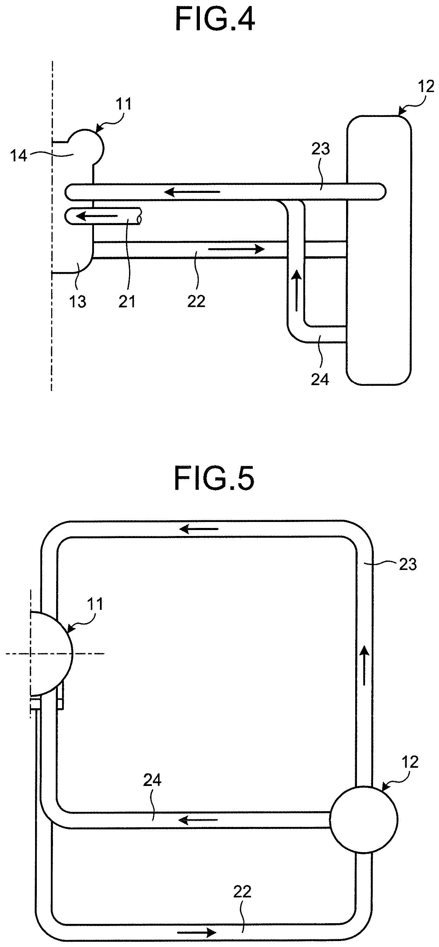

FIG. 4 is a plan view of the steam turbine plant to which a moisture separator of the first embodiment has been applied, and FIG. 5 is a side view illustrating the steam turbine plant.

The steam turbine plant of the first embodiment has, as illustrated in FIG. 4 and FIG. 5, a high and intermediate pressure turbine 11, a low pressure turbine (not illustrated in the drawings), and a high pressure moisture separator (moisture separator) 12; and the high and intermediate pressure turbine 11 is formed of a high pressure turbine portion (high pressure side turbine) 13 and an intermediate pressure turbine portion (low pressure side turbine) 14.

A steam piping 21 from a steam generator (not illustrated in the drawings) is connected to a steam inlet portion of the high pressure turbine portion 13; a steam piping 22 is connected from a steam outlet portion of the high pressure turbine portion 13 to a steam inlet portion of the high pressure moisture separator 12; and two steam pipings 23 and 24 are connected from steam outlet portions of the high pressure moisture separator 12 to steam inlet portions of the intermediate pressure turbine portion 14. Further, although not illustrated in the drawings, a steam piping is connected from a steam outlet portion of the intermediate pressure turbine portion 14 to a steam inlet portion of a low pressure moisture separator, and a steam piping is connected from a steam outlet portion of the low pressure moisture separator to a steam inlet portion of the low pressure turbine.

In this case, the high pressure moisture separator 12 has the steam inlet portion in its longitudinally intermediate portion at its lower portion, and the steam piping 22 from the high pressure turbine portion 13 is connected to the steam inlet portion of the high pressure moisture separator 12 by bending twice. The high pressure moisture separator 12 has a first steam outlet portion provided toward one of its longitudinal end portions at its upper portion, and the steam piping 23 is connected to the steam inlet portion at an upper portion of the intermediate pressure turbine portion 14 by extending upward and bending twice. Further, the high pressure moisture separator 12 has a second steam outlet portion provided toward the other one of its longitudinal end portions at its side portion, and the steam piping 24 is connected to the steam inlet portion at a lower portion of the intermediate pressure turbine portion 14 by extending laterally and bending three times.

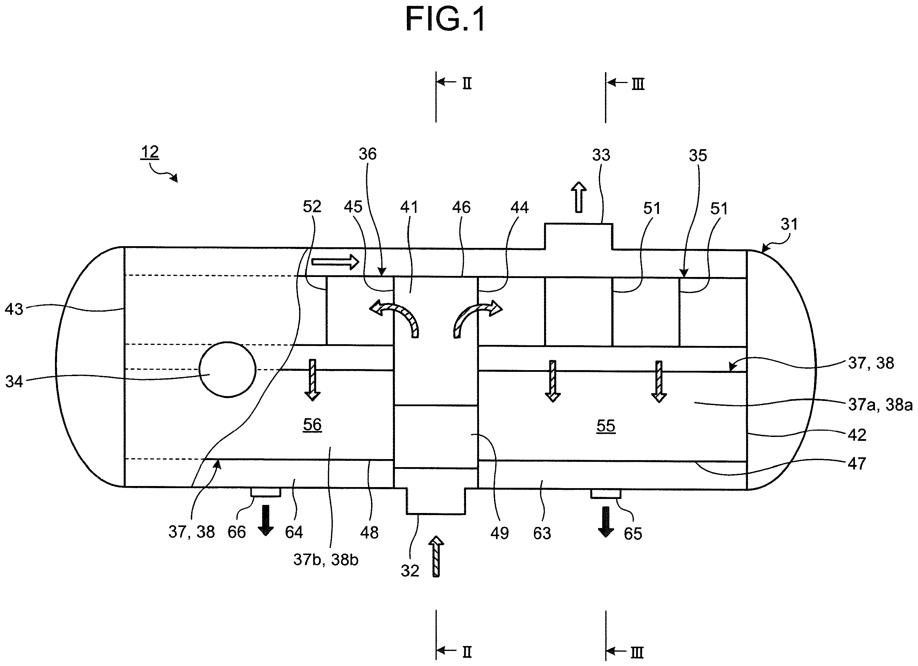

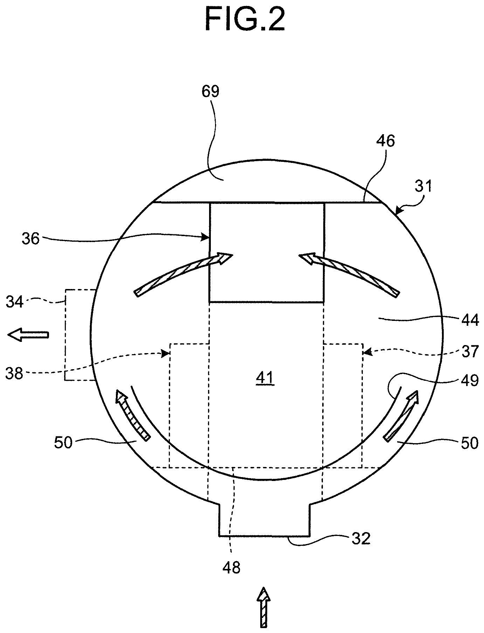

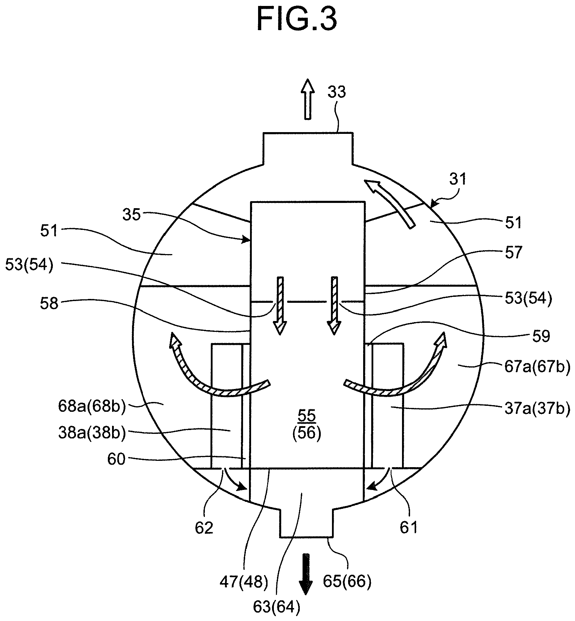

The high pressure moisture separator 12 will now be described in detail. FIG. 1 is a schematic configuration diagram illustrating the moisture separator of the first embodiment, FIG. 2 is a vertical sectional (a section along II-II in FIG. 1) view at a steam inlet portion in the moisture separator, and FIG. 3 is a vertical sectional (a section along III-III in FIG. 1) view at a moisture separating element in the moisture separator.

The high pressure moisture separator 12 has, as illustrated in FIG. 1 to FIG. 3, a body 31, a steam inlet portion 32, steam outlet portions 33 and 34, manifold portions (manifold) 35 and 36, and moisture separating elements (moisture separating portion) 37 and 38.

The body 31 has a hollow shape with its longitudinal ends being closed, and is arranged transversely to extend in a horizontal direction. The steam inlet portion 32 is provided along a vertical direction in a longitudinally intermediate portion at a lower portion of the body 31, and steam is able to be introduced into the steam inlet portion 32 from outside. The first steam outlet portion 33 is provided, along the vertical direction, toward one of longitudinal end portions of the body 31 (at a right end portion side in FIG. 1) at an upper portion of the body 31; and the second steam outlet portion 34 is provided, along the horizontal direction, toward the other one of the longitudinal end portions of the body 31 (at a left end portion side in FIG. 1) at a side portion of the body 31. Through the first steam outlet portion 33 and the second steam outlet portion 34, steam from which moisture has been separated in the moisture separating elements (moisture separating portion) 37 and 38 is discharged outside.

The body 31 has a steam introducing chamber 41 provided in its longitudinally intermediate portion, and the steam inlet portion 32 communicates with this steam introducing chamber 41. Specifically: a pair of first supporting walls 42 and 43 are respectively fixed, along the vertical direction, in the longitudinal end portions of the body 31; and a pair of second supporting walls 44 and 45 are positioned at both sides of the steam inlet portion 32, and are each fixed, along the vertical direction, in the longitudinally intermediate portion of the body 31. Further, the body 31 has a third supporting wall 46 that is fixed along the horizontal direction so as to connect the second supporting walls 44 and 45 to each other, in a vertically upper portion of the body 31. The body 31 also has, in its vertically lower portion: a fourth supporting wall 47 that is fixed along the horizontal direction so as to connect the first supporting wall 42 to the second supporting wall 44; and a fourth supporting wall 48 that is fixed along the horizontal direction so as to connect the first supporting wall 43 to the second supporting wall 45.

The steam introducing chamber 41 is formed by being partitioned by a part of the body 31, the second supporting walls 44 and 45, and the third supporting wall 46. The steam inlet portion 32 provided at the lower portion of the body 31 communicates with a lower portion of this steam introducing chamber 41. Further, the steam introducing chamber 41 has therein a buffer plate (buffer member) 49 provided opposite to the steam inlet portion 32. The buffer plate 49 has a curved shape along the body 31, is arranged with a predetermined gap from an inner wall surface of the lower portion of the body 31, and end portions of the buffer plate 49 are respectively fixed to the second supporting walls 44 and 45. This buffer plate 49 provides a steam introducing passage 50, through which steam which has flowed in from the steam inlet portion 32 and through the gap between the buffer plate 49 and the body 31 rises.

The manifold portions 35 and 36 are arranged with a predetermined gap from the inner wall surface of the body 31, and each of their longitudinal end portions communicates with the steam inlet portion 32 via the steam introducing chamber 41. The first manifold portion 35 has a rectangular tubular shape, and is arranged between the first supporting wall 42 and the second supporting wall 44; one end portion of the first manifold portion 35 is closed by being fixed to the first supporting wall 42, and the other end portion is fixed to the second supporting wall 44 and communicates with the steam introducing chamber 41 by opening thereto. The second manifold portion 36 has a rectangular tubular shape, and is arranged between the first supporting wall 43 and the second supporting wall 45; one end portion of the second manifold portion 36 is closed by being fixed to the first supporting wall 43, and the other end portion is fixed to the second supporting wall 45 and communicates with the steam introducing chamber 41 by opening thereto.

The first manifold portion 35 and the second manifold portion 36 are arranged in series at both sides of the steam introducing chamber 41 in the longitudinal direction (horizontal direction) of the body 31, and are arranged at a substantially radially central portion in the body 31. Specifically, the first manifold portion 35 and the second manifold portion 36 are arranged at a portion slightly higher than a central portion of the body 31 in a height direction, at a central portion of the body 31 in the width direction, and are supported by plural supporting plates 51 and 52 onto the body 31. The first manifold portion 35 and the second manifold portion 36 respectively have plural steam blowout portions 53 and 54 provided along the longitudinal direction at lower portions thereof. These plural steam blowout portions 53 and 54 are, for example, slit-shaped, provided in two rows at the lower portions of the manifold portions 35 and 36, and set such that areas of their openings increase toward the end portions of the manifold portions 35 and 36 (the body 31) from the steam introducing chamber 41 side. That is, since pressure of steam decreases toward downstream in the manifold portions 35 and 36, the areas of the openings of the steam blowout portions 53 and 54 are increased toward downstream in flow directions of the steam.

In this embodiment, the manifold according to the present invention is formed of the two manifold portions 35 and 36, but the manifold may be formed of a single manifold portion, and this single manifold portion may be configured to communicate with the steam inlet portion 32 via the steam introducing chamber 41.

The moisture separating elements 37 and 38 separate moisture from steam blown out from the steam blowout portions 53 and 54 of the manifold portions 35 and 36. The moisture separating elements 37 and 38 are formed of multiple wave-shaped separator vanes layered over one another at predetermined intervals, and are able to separate the moisture by passage of the steam therethrough. The first moisture separating element 37 is arranged at one side in the width direction (right side in FIG. 3) of the body 31, and the second moisture separating element 38 is arranged at the other side in the width direction (left side in FIG. 3) of the body 31. Further, the first moisture separating element 37 is formed of a moisture separating element 37a arranged at the first manifold portion 35 side and a moisture separating element 37b arranged at the second manifold portion 36 side; and the second moisture separating element 38 is formed of a moisture separating element 38a arranged at the first manifold portion 35 side and a moisture separating element 38b arranged at the second manifold portion 36 side.

Specifically, the body 31 has steam blowout chambers 55 and 56 provided at a side nearer the steam blowout portions 53 and 54 of the first manifold portion 35 and the second manifold portion 36. These steam blowout chambers 55 and 56 are partitioned by the first manifold portion 35 and second manifold portion 36, the first moisture separating element 37 and second moisture separating element 38, left and right connecting plates 57 and 58 that connect the steam blowout chambers 55 and 56 to each other, and the fourth and fifth supporting walls 47 and 48. The moisture separating elements 37a and 38a face the steam blowout chamber 55, and the moisture separating elements 37b and 38b face the steam blowout chamber 56. Therefore, the moisture separating elements 37a and 38a are arranged opposite to each other at both sides of the steam blowout chamber 55 in the width direction of the body 31, and the moisture separating elements 37b and 38b are arranged opposite to each other at both sides of the steam blowout chamber 56 in the width direction of the body 31.

The first moisture separating element 37 (37a and 37b) and the second moisture separating element 38 (38a and 38b) have baffle plates 59 and 60 provided in close contact therewith at the steam blowout chambers 55 and 56 sides. These baffle plates 59 and 60 are each configured to have a predetermined plate thickness, and to have plural through holes (orifices) formed along a plate thickness direction thereof. Further, the fourth supporting walls 47 and 48 each have drain openings 61 and 62 provided opposite to each other below the moisture separating elements 37 and 38, and the drain openings 61 and 62 communicate with drain passages 63 and 64 partitioned by the fourth supporting walls 47 and 48 and the body 31. The body 31 has, at its lower portion, drain outlet portions 65 and 66, with which the drain passages 63 and 64 communicate.

The body 31 has steam discharge passages 67a and 68a provided at a downstream side in the moisture separating elements 37a and 38a, and steam discharge passages 67b and 68b provided at a downstream side in the moisture separating elements 37b and 38b. Further, a steam confluence passage 69 is provided between: an inner ceiling wall surface of the body 31; and the manifold portions 35 and 36 and the third supporting wall 46. The steam confluence passage 69 provides communication between the steam discharge passages 67a and 68a, and between the steam discharge passages 67b and 68b, and provides communication between: the steam discharge passages 67a and 68a; and the steam discharge passages 67b and 68b. These steam discharge passages 67a, 67b, 68a, and 68b guide the steam from which moisture has been separated in the moisture separating elements 37 and 38 to the steam outlet portions 33 and 34 by causing the steam to flow along the inner wall surface of the body 31. The first steam outlet portion 33 directly communicates with the steam confluence passage 69, and the second steam outlet portion 34 directly communicates with the steam discharge passage 68b.

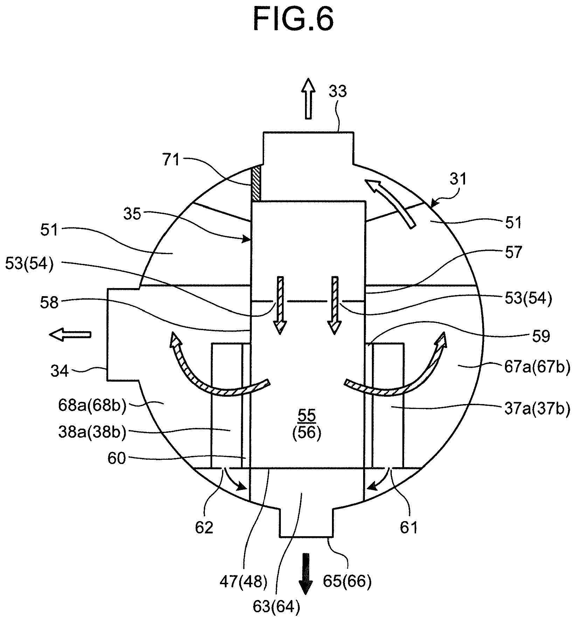

The steam discharge passages 67a, 67b, 68a, and 68b guide the steam which has passed through the moisture separating elements 37a, 37b, 38a, and 38b, to the steam outlet portions 33 and 34, but are not limited to this configuration. FIG. 6 is a vertical sectional view illustrating a modification of the moisture separator of the first embodiment.

As illustrated in FIG. 6, a partition plate (second distribution member) 71 is provided, which distributes the steam from which moisture has been removed by the first moisture separating element 37 and the second moisture separating element 38, to the first steam outlet portion 33 and the second steam outlet portion 34. This partition plate 71 separates the steam discharge passages 67b and 68b from each other by connecting an upper end portion of the second manifold portion 36 to a ceiling portion (inner wall surface) of the body 31. Therefore, it becomes easier, due to the partition plate 71, for the steam discharged from the moisture separating element 37b to the steam discharge passage 67b, to be discharged from the first steam outlet portion 33, and it becomes easier, due to the partition plate 71, for the steam discharged from the moisture separating element 38b to the steam discharge passage 68b, to be discharged from the second steam outlet portion 34.

Functions of the high pressure moisture separator 12 of the first embodiment will now be described.

As illustrated in FIG. 4 and FIG. 5, heating steam generated in the steam generator is fed through the steam piping 22 to the high pressure moisture separator 12 after being fed through the steam piping 21 to the high pressure turbine portion 13 and driving the high pressure turbine portion 13. The steam from which moisture has been removed in the high pressure moisture separator 12 is fed through the steam pipings 23 and 24 to the intermediate pressure turbine portion 14.

In this high pressure moisture separator 12, as illustrated in FIG. 1 to FIG. 3, steam is introduced into the steam introducing chamber 41 from the steam inlet portion 32 at the lower portion of the body 31, flows through the steam introducing passage 50 after colliding with the buffer plate 49 in the steam introducing chamber 41, is fed to the first manifold portion 35 from an opening in the second supporting wall 44, and is fed to the second manifold portion 36 from an opening in the second supporting wall 45. The steam fed to the first manifold portion 35 flows in the longitudinal direction, and is blown out to the steam blowout chamber 55 from the plural steam blowout portions 53. Further, the steam fed to the second manifold portion 36 flows in the longitudinal direction, and is blown out to the steam blowout chamber 56 from the plural steam blowout portions 54.

The steam blown out to the steam blowout chamber 55 is baffled by the opposing baffle plates 59 and 60 and guided to the moisture separating elements 37a and 38a. In these moisture separating elements 37a and 38a, when the steam passes between the plural wave-shaped separators, moisture included in the steam is then able to be turned into drain and separated by colliding with the separators. Similarly, the steam blown out to the steam blowout chamber 56 is baffled by the opposing baffle plates 59 and 60 and guided to the moisture separating elements 37b and 38b. In these moisture separating elements 37b and 38b, when the steam passes between the plural wave-shaped separators, moisture included in the steam is able to be turned into drain and separated by colliding with the separators.

Flows of the steam from which moisture has been separated by the moisture separating elements 37a and 38a go through the steam discharge passages 67a and 68a, and join each other in the steam confluence passage 69. Further, flows of the steam from which moisture has been separated by the moisture separating elements 37b and 38b go through the steam discharge passages 67b and 68b, and join each other in the steam confluence passage 69. The flows of the steam from which moisture has been separated by the moisture separating elements 37a, 37b, 38a, and 38b go toward regions where pressure loss is low. That is, the flows of the steam from which moisture has been separated by the moisture separating elements 37a and 38a go through the steam discharge passages 67a and 68a, go toward the steam confluence passage 69 where the first steam outlet portion 33 is present, and join each other there. Further, the flow of the steam from which moisture has been separated by the moisture separating element 37b goes through the steam discharge passage 67b, flows toward the steam confluence passage 69 where the first steam outlet portion 33 is present, and joins the other flows there. The steam from which moisture has been separated by the moisture separating element 38b flows through the steam discharge passage 68b, and flows toward the second steam outlet portion 34.

Therefore, the steam in the steam discharge passage 68b rises and is discharged outside from the second steam outlet portion 34. By contrast, the steam in the steam discharge passages 67a, 67b, and 68a is discharged outside from the first steam outlet portion 33 after rising and joining together in the steam confluence passage 69. However, since the flows of the steam from the three steam discharge passages 67a, 67b, and 68a join together toward the first steam outlet portion 33, pressure loss therein becomes high, and thus some of the steam descends and is discharged outside from the second steam outlet portion 34.

The moisture (drain) that has been separated from the steam in the moisture separating elements 37a, 37b, 38a, and 38b flows down to the drain passages 63 and 64 through the drain openings 61 and 62, and is discharged outside from the drain outlet portions 65 and 66.

As described above, provided in the moisture separator of the first embodiment are: the body 31 that is hollow-shaped and extends in the horizontal direction; the steam inlet portion 32 provided in the longitudinally intermediate portion of the body 31; the manifold portions 35 and 36 that are arranged with the predetermined gap from the inner wall surface of the body 31, have a longitudinally intermediate portion communicating with the steam inlet portion 32, and have the plural steam blowout portions 53 and 54 provided along the longitudinal direction; the moisture separating elements 37 and 38 that separate the moisture from the steam blown out from the plural steam blowout portions 53 and 54; and the steam outlet portions 33 and 34 which are provided in the body 31 and through which the steam is discharged, the steam having had the moisture separated therefrom and flowing along the inner wall surface of the body 31.

Therefore, the steam is introduced into the body 31 from the steam inlet portion 32, descends at both sides by being fed to and flowing through the manifold portions 35 and 36, and is blown out from the plural steam blowout portions 53 and 54; moisture is separated from the steam as the steam passes through the moisture separating elements 37 and 38; and the steam from which the moisture has been separated flows along the inner wall surface of the body 31 and is discharged outside from the steam outlet portions 33 and 34. Therefore, since the steam flows along the inner wall surface of the body 31 and is discharged from the steam outlet portions 33 and 34, after the flow velocity is decreased and the moisture has been separated therefrom. Thus, erosion of the body 31 by the steam is able to be prevented, increase in size of the body 31 is able to be prevented, reinforcement of the body 31 is not needed, increase in the manufacturing cost is able to be prevented, and the performance is able to be improved by efficient separation of moisture from the steam.

In the moisture separator of the first embodiment, the body 31 has the steam introducing chamber 41 provided in its longitudinally intermediate portion, and the steam inlet portion 32 communicates with the steam introducing chamber 41. The first manifold portion 35 and the second manifold portion 36 are arranged in series at both sides of the steam introducing chamber 41 in the longitudinal direction of the body 31, and one of the longitudinal end portions of each of the first manifold portion 35 and second manifold portion 36 communicates with the steam introducing chamber 41. Therefore, the steam is introduced into the steam introducing chamber 41 from the steam inlet portion 32, and fed to the first manifold portion 35 and the second manifold portion 36 from the respective end portions, and thus the steam is able to be introduced substantially uniformly to the manifold portions 35 and 36, and stable moisture separating performance is able to be maintained.

In the moisture separator of the first embodiment, the buffer plate 49 is provided opposite to the steam inlet portion 32 in the steam introducing chamber 41. Therefore, the steam introduced into the steam introducing chamber 41 from the steam inlet portion 32 is fed to the first manifold portion 35 and the second manifold portion 36 after some of the moisture included in the steam is removed as the steam collides with the buffer plate 49, and thus the moisture separating performance is able to be improved.

In the moisture separator of the first embodiment, the steam blowout chambers 55 and 56 are provided at the side of the plural steam blowout portions 53 and 54 in the body 31, and the moisture separating elements 37 and 38 face the steam blowout chambers 55 and 56. Therefore, the steam blown out to the steam blowout chambers 55 and 56 from the respective steam blowout portions 53 and 54 of the first manifold portion 35 and second manifold portion 36 is fed to the moisture separating elements 37 and 38 facing these steam blowout chambers 55 and 56, and thus the amount of steam fed to the moisture separating elements 37 and 38 is able to be uniformized and the moisture separating performance is able to be improved.

In the moisture separator of the first embodiment, the baffle plates 59 and 60 are provided in close contact with the moisture separating elements 37 and 38 at the steam blowout chambers 55 and 56 side of the moisture separating elements 37 and 38. Therefore, the flow rate distribution of the steam flowing to the moisture separating elements 37 and 38 is uniformized as the steam is baffled by the baffle plates 59 and 60. Accordingly, stable moisture separating performance of the moisture separating elements 37 and 38 is able to be maintained.

In the moisture separator of the first embodiment, the first moisture separating element 37 and the second moisture separating element 38 are arranged opposite to each other at both sides of the steam blowout chambers 55 and 56 in the width direction of the body 31. Therefore, moisture is removed from the steam blown out to the steam blowout chambers 55 and 56 from the steam blowout portions 53 and 54 of the first manifold portion 35 and second manifold portion 36, as the steam passes through the first moisture separating element 37 and second moisture separating element 38 facing these steam blowout chambers 55 and 56, and thus moisture separation treatment is able to be carried out stably on a predetermined amount of steam.

In the moisture separator of the first embodiment, the first steam outlet portion 33 is provided at the upper portion of the body 31, and the second steam outlet portion 34 is provided at the side portion of the body 31. Therefore, freedom of arrangement of the steam pipings 23 and 24 connected to the steam outlet portions 33 and 34 is improved, and optimum arrangement of the steam pipings 23 and 24 is enabled.

In the moisture separator of the first embodiment, the partition plate 71 is provided, which distributes the steam to the first steam outlet portion 33 and the second steam outlet portion 34, the steam having had the moisture removed by the first moisture separating element 37 and the second moisture separating element 38. Therefore, the steam from which moisture has been removed by the first moisture separating element 37 and the second moisture separating element 38 is distributed to the first steam outlet portion 33 and the second steam outlet portion 34 by the partition plate 71 and discharged therethrough, and thus an uneven flow of the steam to one of the steam outlet portions 33 and 34 is prevented, decrease in the flow velocity of the steam inside the body 31 is prevented, and the moisture separation treatment is able to be carried out stably.

In the moisture separator of the first embodiment, one of the end portions of each of the manifold portions 35 and 36 is closed and the other one of the end portions thereof communicates with the steam inlet portion 32, and the plural steam blowout portions 53 and 54 are slit-shaped, and the areas of the openings of the plural steam blowout portions 53 and 54 are set so as to increase from the other end portion sides toward the one of the end portions. Therefore, since the pressure of the steam decreases toward downstream in the manifold portions 35 and 36, by the increase in the areas of the openings of the steam blowout portions 53 and 54 toward downstream in the flow directions of the steam, the amount of steam blown out from the steam blowout portions 53 and 54 is able to be uniformized.

Further, provided in the steam turbine plant of the first embodiment are: the high pressure turbine portion (high pressure side turbine) 13; the intermediate pressure turbine portion (low pressure side turbine) 14; and the high pressure moisture separator 12 that removes moisture from the steam used in the high pressure turbine portion 13 and feeds the moisture-removed steam to the intermediate pressure turbine portion 14. Therefore, increase in the manufacturing cost of the high pressure moisture separator 12 is able to be prevented, and the performance is able to be improved by efficient separation of moisture from the steam.

Further, the first steam outlet portion 33 in the high pressure moisture separator 12 is provided at the upper portion of the body 31, the second steam outlet portion 34 is provided at the side portion of the body 31, and the steam pipings 23 and 24 are connected to the steam outlet portions 33 and 34. Therefore, freedom of arrangement of the steam pipings 23 and 24 connecting the high and intermediate pressure turbine 11 to the high pressure moisture separator 12 is improved, and the steam pipings 23 and 24 are able to be arranged at optimum positions with less bent portions therein.

### [Second Embodiment]

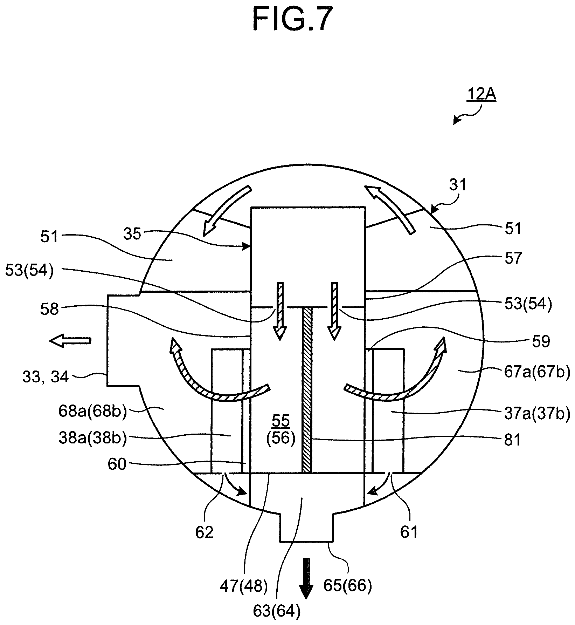

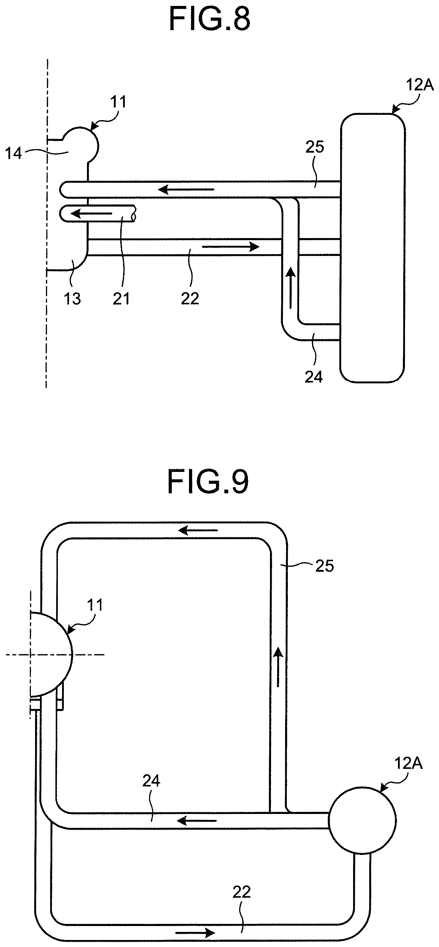

FIG. 7 is a vertical sectional view illustrating a moisture separator of a second embodiment, FIG. 8 is a plan view of a steam turbine plant to which the moisture separator of the second embodiment has been applied, and FIG. 9 is a side view illustrating the steam turbine plant. A basic configuration of the moisture separator of this embodiment is substantially the same as the above described configuration of the first embodiment, and will be described by use of FIG. 1 and FIG. 2; and parts having the same functions as those of the above described first embodiment will be assigned with the same reference signs, and detailed description thereof will be omitted.

The steam turbine plant of the second embodiment has, as illustrated in FIG. 8 and FIG. 9, a high and intermediate pressure turbine 11, a low pressure turbine (not illustrated in the drawings), and a high pressure moisture separator (moisture separator) 12A; and the high and intermediate pressure turbine 11 is formed of a high pressure turbine portion 13 and an intermediate pressure turbine portion 14.

A steam piping 21 from a steam generator is connected to a steam inlet portion of the high pressure turbine portion 13, a steam piping 22 is connected from a steam outlet portion of the high pressure turbine portion 13 to a steam inlet portion of the high pressure moisture separator 12A, and two steam pipings 24 and 25 are connected from steam outlet portions of the high pressure moisture separator 12A to steam inlet portions of the intermediate pressure turbine portion 14. In this case, the high pressure moisture separator 12A has the steam inlet portion in its longitudinally intermediate portion at its lower portion, and the steam piping 22 from the high pressure turbine portion 13 is connected to the steam inlet portion of the high pressure moisture separator 12A by bending twice. The high pressure moisture separator 12A has a first steam outlet portion provided toward one of its longitudinal end portions at its side portion, and the steam piping 25 is connected to the steam inlet portion at an upper portion of the intermediate pressure turbine portion 14 by extending laterally and bending three times. Further, the high pressure moisture separator 12A has a second steam outlet portion provided toward the other one of its longitudinal end portions at its side portion, and the steam piping 24 is connected to the steam inlet portion at a lower portion of the intermediate pressure turbine portion 14 by extending laterally and bending three times.

The high pressure moisture separator 12A has, as illustrated in FIG. 1, FIG. 2, and FIG. 7, a body 31, a steam inlet portion 32, steam outlet portions 33 and 34, manifold portions 35 and 36, and moisture separating elements 37 and 38.

The body 31 has a hollow shape with its longitudinal ends being closed, and the steam inlet portion 32 is provided at a lower portion in a longitudinally intermediate portion of the body 31. The first steam outlet portion 33 is provided toward one of longitudinal end portions of the body 31 at a side portion of the body 31, and the second steam outlet portion 34 is provided toward the other one of the longitudinal end portions at a side portion of the body 31. The body 31 has a steam introducing chamber 41 provided in its longitudinally intermediate portion, and the steam inlet portion 32 communicates with the steam introducing chamber 41. Further, the steam introducing chamber 41 has therein a buffer plate 49 provided opposite to the steam inlet portion 32, and has a steam introducing passage 50 provided therein, through which steam from the steam inlet portion 32 rises by passing through a gap between the buffer plate 49 and the body 31.

The first manifold portion 35 and the second manifold portion 36 are arranged in series at both sides of the steam introducing chamber 41 in a longitudinal direction of the body 31, and are arranged at a substantially radially central portion in the body 31. The first manifold portion 35 and the second manifold portion 36 respectively have plural steam blowout portions 53 and 54 provided along the longitudinal direction at their lower portions.

The first moisture separating element 37 is arranged at one side in the width direction in the body 31, and the second moisture separating element 38 is arranged at the other side in the width direction in the body 31. The first moisture separating element 37 is formed of a moisture separating element 37a arranged at the first manifold portion 35 side and a moisture separating element 37b arranged at the second manifold portion 36 side; and the second moisture separating element 38 is formed of a moisture separating element 38a arranged at the first manifold portion 35 side and a moisture separating element 38b arranged at the second manifold portion 36 side. The moisture separating elements 37a and 38a are arranged opposite to each other at both sides of the steam blowout chamber 55 in the width direction of the body 31, and the moisture separating elements 37b and 38b are arranged opposite to each other at both sides of the steam blowout chamber 56 in the width direction of the body 31. The first moisture separating element 37 and the second moisture separating element 38 have baffle plates 59 and 60 provided in close contact therewith at the steam blowout chambers 55 and 56 sides.

Further, the steam blowout chambers 55 and 56 have a partition plate (first distribution member) 81 provided therein, which distributes steam blown out from the steam blowout portions 53 and 54, to the first moisture separating element 37 (37a and 37b) and the second moisture separating element 38 (38a and 38b). Between first supporting walls 42 and 43 and second supporting walls 44 and 45, an upper end portion of this partition plate 81 is fixed to lower portions of the first manifold portion 35 and second manifold portion 36, and a lower end portion thereof is fixed to fourth and fifth supporting walls 47 and 48. In this case, the partition plate 81 is arranged such that the steam blowout portions 53 and 54 of the first manifold portion 35 and second manifold portion 36 are positioned in both regions of the first moisture separating element 37 and second moisture separating element 38.

The body 31 has steam discharge passages 67a and 68a provided at a downstream side in the moisture separating elements 37a and 38a, and steam discharge passages 67b and 68b provided at a downstream side in the moisture separating elements 37b and 38b. Further, a steam confluence passage 69 is provided between: an inner ceiling wall surface of the body 31; and the manifold portions 35 and 36 and a third supporting wall 46. The steam confluence passage 69 provides communication between the steam discharge passages 67a and 68a, and between the steam discharge passages 67b and 68b, and provides communication between: the steam discharge passages 67a and 68a; and the steam discharge passages 67b and 68b.

Therefore, in the high pressure moisture separator 12A, steam is introduced from the steam inlet portion 32 into the steam introducing chamber 41, and therein, after colliding with the buffer plate 49, flows through the steam introducing passage 50, and is fed to the first manifold portion 35 and second manifold portion 36. The steam fed to the first manifold portion 35 and second manifold portion 36 flows in the longitudinal direction, and is blown out to the steam blowout chambers 55 and 56 from the plural steam blowout portions 53 and 54. After being distributed toward the first moisture separating element 37 and the second moisture separating element 38 by the partition plate 81, the steam blown out to the steam blowout chambers 55 and 56 is baffled by the baffle plates 59 and 60, and guided to the moisture separating elements 37 and 38. The moisture separating elements 37 and 38 remove moisture included in this steam, and separate the moisture as drain.

The steam from which moisture has been separated by the first moisture separating element 37a and second moisture separating element 38a flows to the steam discharge passages 67a and 68a; and the steam in the steam discharge passage 67a flows to the steam confluence passage 69, and is discharged outside thereafter, together with the steam in the steam discharge passage 68a, from the first steam outlet portion 33. Further, the steam from which moisture has been separated by the first moisture separating element 37b and second moisture separating element 38b flows to the steam discharge passages 67b and 68b; and the steam in the steam discharge passage 67b flows to the steam confluence passage 69, and is discharged outside thereafter, together with the steam in the steam discharge passage 68b, from the second steam outlet portion 34.

As described above, provided in the moisture separator of the second embodiment are: the body 31 having the steam inlet portion 32 and the steam outlet portions 33 and 34; the manifold portions 35 and 36 that are arranged with a predetermined gap from an inner wall surface of the body 31, communicate with the steam inlet portion 32, and have the plural steam blowout portions 53 and 54 provided therein; the steam blowout chambers 55 and 56 to which steam is blown out from the plural steam blowout portions 53 and 54; the moisture separating elements 37 and 38 that separate moisture from the steam in the steam blowout chambers 55 and 56; and the partition plate 81 that is provided in the steam blowout chambers 55 and 56, and distributes the steam blown out from the steam blowout portions 53 and 54, to the first moisture separating element 37 and the second moisture separating element 38.

Therefore, the steam blown out to the steam blowout chambers 55 and 56 from the steam blowout portions 53 and 54 of the first manifold portion 35 and second manifold portion 36 passes by being distributed by the partition plate 81 to the first moisture separating element 37 and the second moisture separating element 38, and thus the amount of steam treated by the moisture separating elements 37 and 38 is uniformized and the moisture separation treatment is able to be carried out stably.

Further, in the steam turbine plant of the second embodiment, the first steam outlet portion 33 and the second steam outlet portion 34 in the high pressure moisture separator 12 are provided at the side portions of the body 31, and the steam pipings 24 and 25 are connected to the steam outlet portions 33 and 34. Therefore, freedom of arrangement of the steam pipings 24 and 25 connecting the high and intermediate pressure turbine 11 to the high pressure moisture separator 12 is improved, and the steam pipings 24 and 25 are able to be arranged at optimum positions. Furthermore, with a space above the high pressure moisture separator 12 made available, another apparatus, for example, a low pressure feed water heater, is able to be arranged therein, and space is able to be effectively utilized.

### [Third Embodiment]

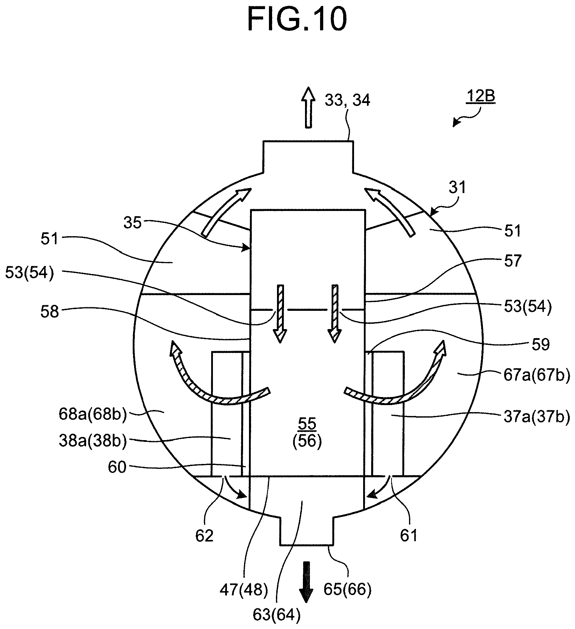

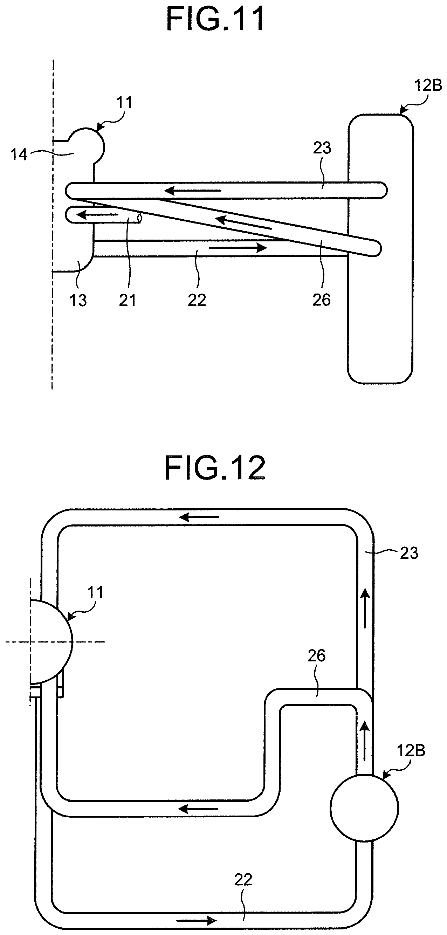

FIG. 10 is a vertical sectional view illustrating a moisture separator of a third embodiment, FIG. 11 is a plan view illustrating a steam turbine plant to which the moisture separator of the third embodiment has been applied, and FIG. 12 is a side view illustrating the steam turbine plant. A basic configuration of the moisture separator of this embodiment is substantially the same as the above described configuration of the first embodiment, and will be described by use of FIG. 1 and FIG. 2; and parts having the same functions as those of the above described first embodiment will be assigned with the same reference signs, and detailed description thereof will be omitted.

The steam turbine plant of the third embodiment has, as illustrated in FIG. 11 and FIG. 12, a high and intermediate pressure turbine 11, a low pressure turbine (not illustrated in the drawings), and a high pressure moisture separator (moisture separator) 12B; and the high and intermediate pressure turbine 11 is formed of a high pressure turbine portion 13 and an intermediate pressure turbine portion 14.

A steam piping 21 from a steam generator is connected to a steam inlet portion of the high pressure turbine portion 13, a steam piping 22 is connected from a steam outlet portion of the high pressure turbine portion 13 to a steam inlet portion of the high pressure moisture separator 12B, and two steam pipings 23 and 26 are connected from steam outlet portions of the high pressure moisture separator 12B to steam inlet portions of the intermediate pressure turbine portion 14. In this case, the high pressure moisture separator 12B has the steam inlet portion in its longitudinally intermediate portion at its lower portion, and the steam piping 22 from the high pressure turbine portion 13 is connected to the steam inlet portion of the high pressure moisture separator 12B by bending twice. The high pressure moisture separator 12B has a first steam outlet portion provided toward one of its longitudinal end portions at its upper portion, and the steam piping 23 is connected to the steam inlet portion at an upper portion of the intermediate pressure turbine portion 14 by extending upward and bending twice. Further, the high pressure moisture separator 12B has a second steam outlet portion provided toward the other one of its longitudinal end portions at its upper portion, and the steam piping 26 is connected to the steam inlet portion at a lower portion of the intermediate pressure turbine portion 14 by extending upward and bending three times.

The high pressure moisture separator 12B has, as illustrated in FIG. 1, FIG. 2, and FIG. 10, a body 31, a steam inlet portion 32, steam outlet portions 33 and 34, manifold portions 35 and 36, and moisture separating elements 37 and 38.

The body 31 has a hollow shape with its longitudinal ends being closed, and the steam inlet portion 32 is provided at a lower portion in a longitudinally intermediate portion of the body 31. The first steam outlet portion 33 is provided at an upper portion toward one of longitudinal end portions of the body 31, and the second steam outlet portion 34 is provided at the upper portion toward the other one of the longitudinal end portions of the body 31. The body 31 has a steam introducing chamber 41 provided in its longitudinally intermediate portion, and the steam inlet portion 32 communicates with the steam introducing chamber 41. Further, the steam introducing chamber 41 has therein a buffer plate 49 provided opposite to the steam inlet portion 32, and has a steam introducing passage 50 provided therein, through which steam from the steam inlet portion 32 rises by passing through a gap between the buffer plate 49 and the body 31.

Since the first manifold portion 35 and second manifold portion 36, and the first moisture separating element 37 and second moisture separating element 38 are the same as those of the above described first embodiment, description thereof will be omitted.

The body 31 has steam discharge passages 67a and 68a provided at a downstream side in the moisture separating elements 37a and 38a, and steam discharge passages 67b and 68b provided at a downstream side in the moisture separating elements 37b and 38b. Further, a steam confluence passage 69 is provided between: an inner ceiling wall surface of the body 31; and the manifold portions 35 and 36 and a third supporting wall 46. The steam confluence passage 69 provides communication between the steam discharge passages 67a and 68a, and between the steam discharge passages 67b and 68b, and provides communication between: the steam discharge passages 67a and 68a; and the steam discharge passages 67b and 68b.

Therefore, in the high pressure moisture separator 12B, steam is introduced from the steam inlet portion 32 into the steam introducing chamber 41, and therein, after colliding with the buffer plate 49, flows through the steam introducing passage 50, and is fed to the first manifold portion 35 and second manifold portion 36. The steam fed to the first manifold portion 35 and second manifold portion 36 flows in a longitudinal direction, and is blown out to steam blowout chambers 55 and 56 from plural steam blowout portions 53 and 54. The steam blown out to the steam blowout chambers 55 and 56 is baffled by the baffle plates 59 and 60, and guided to the moisture separating elements 37 and 38. The moisture separating elements 37 and 38 remove moisture included in this steam, and separate the moisture as drain.

The steam from which moisture has been separated by the first moisture separating element 37a and second moisture separating element 38a flows to the steam discharge passages 67a and 68a, joins together in the steam confluence passage 69, and is discharged outside thereafter from the first steam outlet portion 33. Further, the steam from which moisture has been separated by the first moisture separating element 37b and second moisture separating element 38b flows to the steam discharge passages 67b and 68b, joins together in the steam confluence passage 69, and is discharged outside thereafter from the second steam outlet portion 34.

As described above, provided in the moisture separator of the third embodiment are: the body 31 having the steam inlet portion 32 and the steam outlet portions 33 and 34; the manifold portions 35 and 36 that are arranged with a predetermined gap from an inner wall surface of the body 31, communicate with the steam inlet portion 32, and have the plural steam blowout portions 53 and 54 provided therein; the steam blowout chambers 55 and 56 to which steam is blown out from the plural steam blowout portions 53 and 54; and the moisture separating elements 37 and 38 that separate moisture from the steam in the steam blowout chambers 55 and 56.

Therefore, erosion of the body 31 by the steam is able to be prevented, increase in size of the body 31 is able to be prevented, reinforcement of the body 31 is not needed, increase in the manufacturing cost is able to be prevented, and the performance is able to be improved by efficient separation of moisture from the steam. By the provision of the steam outlet portions 33 and 34 at the upper portion of the body 31, the steam from which moisture has been removed by the moisture separating elements 37 and 38 is distributed appropriately to the steam outlet portions 33 and 34, and the structure is able to be simplified without the need for a partition plate and the like.

Further, in the steam turbine plant of the third embodiment, the first steam outlet portion 33 and the second steam outlet portion 34 in the high pressure moisture separator 12B are provided at the upper portion of the body 31, and the steam pipings 23 and 26 are connected to the steam outlet portions 33 and 34. Therefore, freedom of arrangement of the steam pipings 23 and 26 connecting the high and intermediate pressure turbine 11 to the high pressure moisture separator 12B is improved, and the steam pipings 23 and 26 are able to be arranged at optimum positions.

### [Fourth Embodiment]

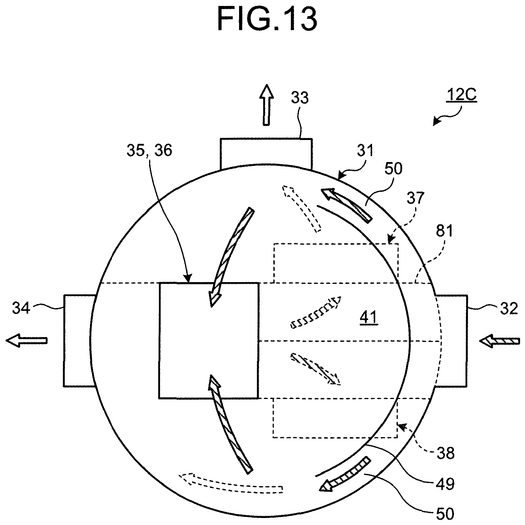

FIG. 13 is a vertical sectional view illustrating a moisture separator of a fourth embodiment. Parts having the same functions as those of the above described embodiments will be assigned with the same reference signs, and detailed description thereof will be omitted.

A high pressure moisture separator 12C of the fourth embodiment has, as illustrated in FIG. 13, a body 31, a steam inlet portion 32, steam outlet portions 33 and 34, manifold portions 35 and 36, and moisture separating elements 37 and 38.

The body 31 has a hollow shape with its longitudinal ends being closed, and the steam inlet portion 32 is provided at one of side portions in a longitudinally intermediate portion of the body 31. The first steam outlet portion 33 is provided at an upper portion toward one of longitudinal end portions of the body 31, and the second steam outlet portion 34 is provided at the other side portion toward the other longitudinal end portion of the body 31. The body 31 has a steam introducing chamber 41 provided in its longitudinally intermediate portion, and the steam introducing chamber 41 communicates with the steam inlet portion 32. Further, the steam introducing chamber 41 has therein a buffer plate 49 provided opposite to the steam inlet portion 32, and has a steam introducing passage 50 provided therein, through which steam from the steam inlet portion 32 rises by passing through a gap between the buffer plate 49 and the body 31.

The first manifold portion 35 and the second manifold portion 36 are arranged in series at both sides of the steam introducing chamber 41 in a longitudinal direction of the body 31, and are arranged at a substantially radially central portion in the body 31. Each of the first manifold portion 35 and the second manifold portion 36 has plural steam blowout portions (not illustrated in the drawings) provided along the longitudinal direction at one of side portions thereof.

The first moisture separating element 37 is arranged at a side higher in a height direction of the body 31, and a second moisture separating element 38 is arranged at a side lower in the height direction of the body 31. The first moisture separating element 37 and the second moisture separating element 38 have steam blowout chambers 55 and 56 provided therebetween. The steam blowout chambers 55 and 56 have a partition plate 81 provided therein, which distributes steam blown out from the steam blowout portions to the first moisture separating element 37 and the second moisture separating element 38, and which is horizontal.

Therefore, in the high pressure moisture separator 12C, steam is introduced from the steam inlet portion 32 into the steam introducing chamber 41, and therein, after colliding with the buffer plate 49, flows through the steam introducing passage 50, and is fed to the first manifold portion 35 and second manifold portion 36. The steam fed to the first manifold portion 35 and second manifold portion 36 flows in the longitudinal direction, is blown out from the plural steam blowout portions, and is distributed, by the partition plate 81, toward the first moisture separating element 37 and the second moisture separating element 38. The steam is baffled by baffle plates 59 and 60, and guided to the moisture separating elements 37 and 38. The moisture separating elements 37 and 38 remove moisture included in this steam, and separate the moisture as drain. The steam from which moisture has been separated by the first moisture separating element 37 and second moisture separating element 38 is discharged outside from the first steam outlet portion 33 and the second steam outlet portion 34.

As described above, provided in the moisture separator of the fourth embodiment are: the body 31; the steam inlet portion 32 provided at one of the side portions of the body 31; the manifold portions 35 and 36 that are arranged with a predetermined gap from an inner wall surface of the body 31, have a longitudinally intermediate portion communicating with the steam inlet portion 32, and have the plural steam blowout portions provided therein; the moisture separating elements 37 and 38 that separate moisture from steam blown out from the plural steam blowout portions; and the steam outlet portions 33 and 34 which are provided at the upper portion and the side portion of the body 31 and through which steam is discharged, the steam having had the moisture separated therefrom and flowing along the inner wall surface of the body 31.

Therefore, the steam decreases in flow velocity in the manifold portions 35 and 36, flows along the inner wall surface of the body 31 after moisture is removed therefrom in the moisture separating elements 37 and 38, and is discharged from the steam outlet portions 33 and 34. Thus, erosion of the body 31 by the steam is able to be prevented, increase in size of the body 31 is able to be prevented, reinforcement of the body 31 is not needed, increase in the manufacturing cost is able to be prevented, and the performance is able to be improved by efficient separation of moisture from the steam.

### [Fifth Embodiment]

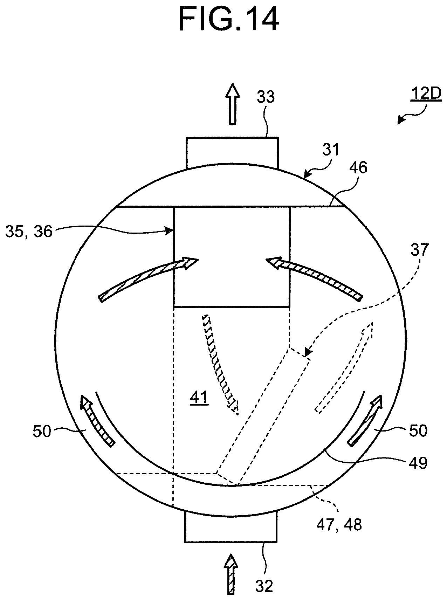

FIG. 14 is a vertical sectional view illustrating a moisture separator of a fifth embodiment. Parts having the same functions as those of the above described embodiments will be assigned with the same reference signs, and detailed description thereof will be omitted.

A high pressure moisture separator 12D of the fifth embodiment has, as illustrated in FIG. 14, a body 31, a steam inlet portion 32, a steam outlet portion 33, manifold portions 35 and 36, and a moisture separating element 37.

The body 31 has a hollow shape with its longitudinal ends being closed. The steam inlet portion 32 is provided at a lower portion in a longitudinally intermediate portion of the body 31, and the steam outlet portion 33 is provided at an upper portion toward one of longitudinal end portions of the body 31. The body 31 has a steam introducing chamber 41 provided in its longitudinally intermediate portion, and the steam inlet portion 32 communicates with the steam introducing chamber 41. Further, the steam introducing chamber 41 has therein a buffer plate 49 provided opposite to the steam inlet portion 32, and has a steam introducing passage 50 provided therein, through which steam from the steam inlet portion 32 rises by passing through a gap between the buffer plate 49 and the body 31.

The first manifold portion 35 and the second manifold portion 36 are arranged in series at both sides of the steam introducing chamber 41 in the longitudinal direction of the body 31, and are arranged at a substantially radially central portion in the body 31. Each of the first manifold portion 35 and the second manifold portion 36 has plural steam blowout portions (not illustrated in the drawings) provided along a longitudinal direction at a lower portion thereof. The moisture separating element 37 is arranged in an inclined state at one side in a width direction in the body 31. A steam blowout chamber (not illustrated in the drawings) is provided between: the steam blowout portions of the first manifold portion 35 and second manifold portion 36; and the moisture separating element 37.

Therefore, in the high pressure moisture separator 12D, steam is introduced from the steam inlet portion 32 into the steam introducing chamber 41, and therein, after colliding with the buffer plate 49, flows through the steam introducing passage 50, and is fed to the first manifold portion 35 and second manifold portion 36. The steam fed to the first manifold portion 35 and second manifold portion 36 flows in the longitudinal direction, and is blown out to the steam blowout chamber from the plural steam blowout portions. The steam blown out to the steam blowout chamber is guided to the moisture separating element 37. The moisture separating element 37 removes moisture included in this steam, and separates the moisture as drain. The steam from which moisture has been separated by the moisture separating element 37 is discharged outside from the steam outlet portion 33.

As described above, provided in the moisture separator of the fifth embodiment are: the body 31; the steam inlet portion 32 provided at one of the side portions of the body 31; the manifold portions 35 and 36 that are arranged with a predetermined gap from an inner wall surface of the body 31, have a longitudinally intermediate portion communicating with the steam inlet portion 32, and have the plural steam blowout portions provided therein; the moisture separating element 37 that separates moisture from the steam blown out from the plural steam blowout portions; and the steam outlet portion 33 which is provided at the upper portion of the body 31 and through which steam is discharged, the steam having had the moisture separated therefrom and flowing along the inner wall surface of the body 31.

Therefore, the steam decreases in flow velocity in the manifold portions 35 and 36, flows along the inner wall surface of the body 31 after moisture is removed from the steam in the moisture separating element 37, and is discharged from the steam outlet portion 33. Thus, erosion of the body 31 by the steam is able to be prevented, increase in size of the body 31 is able to be prevented, reinforcement of the body 31 is not needed, increase in the manufacturing cost is able to be prevented, and the performance is able to be improved by efficient separation of moisture from the steam.

In the above described embodiments, the steam inlet portion 32 is provided at the lower portion or side portion of the body 31, and the steam outlet portion 33 or 34 is provided at the upper portion or side portion of the body 31, but not being limited to these positions, for example, the steam inlet portion 32, or the steam outlet portion 33 or 34 may be provided at a diagonally upper portion or a diagonally lower portion of the body 31. Further, the steam inlet portion 32 has been described to be in the longitudinally intermediate portion of the body 31, but the steam inlet portion 32 may be displaced therefrom toward one of the end portions of the body 31 or toward the other one of the end portions of the body 31.

Further, in the above described embodiments, the manifold portions 35 and 36 are arranged with the predetermined gap from the inner wall surface of the body 31, but positions of the manifold portions 35 and 36 may be not at the central position of the body 31, and may be displaced therefrom in an up-down direction or left-right direction.

Further, in the above described embodiment, the moisture separator of the present invention has been described as being applied to the high pressure moisture separator 12, but the moisture separator may be a low pressure moisture separator, or a moisture separator and reheater having a group of heating pipes provided inside its body.

Further, in the above described embodiments, the steam turbine plants of the present invention have each been described as being applied to a nuclear power plant, but not being limited thereto, the steam turbine plants may be applied to, for example, thermal power plants.

### Reference Signs List

11 HIGH AND INTERMEDIATE PRESSURE TURBINE
12, 12A, 12B, 12C, 12D HIGH PRESSURE MOISTURE SEPARATOR (MOISTURE SEPARATOR)
13 HIGH PRESSURE TURBINE PORTION
14 INTERMEDIATE PRESSURE TURBINE PORTION
21, 22, 23, 24, 25, 26 STEAM PIPING
31 BODY
32 STEAM INLET PORTION
33 FIRST STEAM OUTLET PORTION
34 SECOND STEAM OUTLET PORTION
35 FIRST MANIFOLD PORTION
36 SECOND MANIFOLD PORTION
37, 37a, 37b FIRST MOISTURE SEPARATING ELEMENT (MOISTURE SEPARATING PORTION)
38, 38a, 38b SECOND MOISTURE SEPARATING ELEMENT (MOISTURE SEPARATING PORTION)
41 STEAM INTRODUCING CHAMBER
49 BUFFER PLATE (BUFFER MEMBER)
53, 54 STEAM BLOWOUT PORTION
55, 56 STEAM BLOWOUT CHAMBER
59, 60 BAFFLE PLATE
65, 66 DRAIN OUTLET PORTION
67a, 67b, 68a, 68b STEAM DISCHARGE PASSAGE
69 STEAM CONFLUENCE PASSAGE
71 PARTITION PLATE (SECOND DISTRIBUTION MEMBER)
81 PARTITION PLATE (FIRST DISTRIBUTION MEMBER)

## Claims

1. A moisture separator (12,12A,12B,12C,12D), comprising:
a body (31) that has a hollow shape and extends in a horizontal direction;
a steam inlet portion (32) that is provided in a longitudinally intermediate portion of the body (31);
a manifold (35,36) that communicates with the steam inlet portion (32), and has plural steam blowout portions (53,54) provided along a longitudinal direction;
a moisture separating portion (37,37a,37b,38,38a,38b) that separates moisture from steam blown out from the plural steam blowout portions (53,54); and
a steam outlet portion (33,34) that is provided in the body (31), and discharges steam having had the moisture separated therefrom in the moisture separating portion (37,37a,37b,38,38a,38b) and flowing along an inner wall surface of the body (31), **characterized in that**
the manifold (35,36) is arranged with a predetermined gap from the inner wall surface of the body (31).

2. The moisture separator (12,12A,12B,12C,12D) according to claim 1, wherein: the body (31) has a steam introducing chamber in the longitudinally intermediate portion; the steam inlet portion (32) communicates with the steam introducing chamber; the manifold (35,36) has a first manifold portion (35) and a second manifold portion (36) that are arranged at both sides of the steam introducing chamber in the longitudinal direction of the body (31); and one of longitudinal end portions of each of the first manifold portion (35) and the second manifold portion (36) communicates with the steam introducing chamber.

3. The moisture separator (12,12A,12B,12C,12D) according to claim 2, wherein a buffer member is provided opposite to the steam inlet portion (32) in the steam introducing chamber.

4. The moisture separator (12,12A,12B,12C,12D) according to any one of claim 1 to claim 3, wherein the body (31) has a steam blowout chamber (55,56) provided at a side nearer the plural steam blowout portions (53,54), and the moisture separating portion (37,37a,37b,38,38a,38b) faces the steam blowout chamber (55,56).

5. The moisture separator (12,12A,12B,12C,12D) according to claim 4, wherein a baffle plate is provided in close contact with the moisture separating portion (37,37a,37b,38,38a,38b) at the steam blowout chamber (55,56) side of the moisture separating portion (37,37a,37b,38,38a,38b).

6. The moisture separator (12,12A,12B,12C,12D) according to claim 4 or claim 5, wherein the moisture separating portion (37,37a,37b,38,38a,38b) has a first moisture separating element (37,37a,37b) and a second moisture separating element (38,38a,38b) that are arranged opposite to each other at both sides of the steam blowout chamber (55,56) in a width direction of the body (31).

7. The moisture separator (12,12A,12B,12C,12D) according to claim 6, wherein the steam blowout chamber (55,56) is provided with a first distribution member (81) that distributes the steam blown out from the steam blowout portions (53,54), to the first moisture separating element (37,37a,37b) and the second moisture separating element (38,38a,38b).

8. The moisture separator (12,12A,12B,12C,12D) according to claim 6 or claim 7, wherein: the steam inlet portion (32) is provided at a lower portion of the body (31); as the steam outlet portion (33,34), a first steam outlet portion (33) and a second steam outlet portion (34) are provided so as to correspond to the first moisture separating element (37,37a,37b) and the second moisture separating element (38,38a,38b); and a second distribution member (71) is provided that distributes steam to the first steam outlet portion (33) and the second steam outlet portion (34), the steam having had moisture removed therefrom by the first moisture separating element (37,37a,37b) and the second moisture separating element (38,38a,38b).

9. The moisture separator (12,12A,12B,12C,12D) according to claim 8, wherein the first steam outlet portion (33) is provided at an upper portion of the body (31), and the second steam outlet portion (34) is provided at a side portion of the body (31).

10. The moisture separator (12,12A,12B,12C,12D) according to any one of claim 1 to claim 9, wherein: the manifold (35,36) has one end portion that is closed, and the other end portion communicating with the steam inlet portion (32); and the plural steam blowout portions (53,54) are slit-shaped, and areas of openings of the plural steam blowout portions (53,54) are set to increase toward the one end portion from the other end portion side.

11. A steam turbine plant, comprising:
a high pressure side turbine (13);
a low pressure side turbine (14); and
the moisture separator (12,12A,12B,12C,12D) according to any one of claim 1 to claim 10, the moisture separator removing moisture from steam used in the high pressure side turbine and feeding the moisture-removed steam to the low pressure side turbine.

## Patentansprüche

1. Feuchtigkeitsabscheider (12, 12A, 12B, 12C, 12D), umfassend:
einen Körper (31), der eine hohle Form aufweist und sich in eine horizontale Richtung erstreckt;
einen Dampfeinlassabschnitt (32), der in einem Längszwischenabschnitt des Körpers (31) bereitgestellt ist;
eine Sammelleitung (35, 36), die mit dem Dampfeinlassabschnitt (32) kommuniziert und mehrere Dampfausblasabschnitte (53, 54) aufweist, die entlang einer Längsrichtung bereitgestellt sind;
einen Feuchtigkeitsabscheideabschnitt (37, 37a, 37b, 38, 38a, 38b), der Feuchtigkeit von Dampf, der aus den mehreren Dampfausblasabschnitten (53, 54) ausgeblasen wird, abscheidet; und
einen Dampfauslassabschnitt (33, 34), der in dem Körper (31) bereitgestellt ist und Dampf abgibt, aus dem in dem Feuchtigkeitsabscheideabschnitt (37, 37a, 37b, 38, 38a, 38b) Feuchtigkeit abgeschieden wurde und der entlang einer Innenwandoberfläche des Körpers (31) strömt, **dadurch gekennzeichnet, dass**
die Sammelleitung (35, 36) mit einer vorbestimmten Lücke von der Innenwandoberfläche des Körpers (31) angeordnet ist.

2. Feuchtigkeitsabscheider (12, 12A, 12B, 12C, 12D) nach Anspruch 1, wobei: der Körper (31) in dem Längszwischenabschnitt eine Dampfeinführungskammer aufweist; der Dampfeinlassabschnitt (32) mit der Dampfeinführungskammer kommuniziert; die Sammelleitung (35, 36) einen ersten Sammelleitungsabschnitt (35) und einen zweiten Sammelleitungsabschnitt (36) aufweist, die an beiden Seiten der Dampfeinführungskammer in der Längsrichtung des Körpers (31) angeordnet sind; und ein Längsendenabschnitt von jedem des ersten Sammelleitungsabschnitts (35) und des zweiten Sammelleitungsabschnitts (36) mit der Dampfeinführungskammer kommuniziert.

3. Feuchtigkeitsabscheider (12, 12A, 12B, 12C, 12D) nach Anspruch 2, wobei in der Dampfeinführungskammer gegenüberliegend zu dem Dampfeinlassabschnitt (32) ein Pufferelement bereitgestellt ist.

4. Feuchtigkeitsabscheider (12, 12A, 12B, 12C, 12D) nach einem der Ansprüche 1 bis 3, wobei der Körper (31) eine Dampfausblaskammer (55, 56) aufweist, die an einer Seite näher zu den mehreren Dampfausblasabschnitten (53, 54) bereitgestellt ist, und der Feuchtigkeitsabscheideabschnitt (37, 37a, 37b, 38, 38a, 38b) zu der Dampfausblaskammer (55, 56) zeigt.

5. Feuchtigkeitsabscheider (12, 12A, 12B, 12C, 12D) nach Anspruch 4, wobei eine Ablenkplatte in engem Kontakt mit dem Feuchtigkeitsabscheideabschnitt (37, 37a, 37b, 38, 38a, 38b) an der Seite der Dampfausblaskammer (55, 56) des Feuchtigkeitsabscheideabschnitts (37, 37a, 37b, 38, 38a, 38b) bereitgestellt ist.

6. Feuchtigkeitsabscheider (12, 12A, 12B, 12C, 12D) nach Anspruch 4 oder 5, wobei der Feuchtigkeitsabscheideabschnitt (37, 37a, 37b, 38, 38a, 38b) ein erstes Feuchtigkeitsabscheideelement (37, 37a, 37b) und ein zweites Feuchtigkeitsabscheideelement (38, 38a, 38b) aufweist, die gegenüberliegend zueinander an beiden Seiten der Dampfausblaskammer (55, 56) in einer Breitenrichtung des Körpers (31) angeordnet sind.

7. Feuchtigkeitsabscheider (12, 12A, 12B, 12C, 12D) nach Anspruch 6, wobei die Dampfausblaskammer (55, 56) mit einem ersten Verteilungselement (81) bereitgestellt ist, das den Dampf, der aus den Dampfausblasabschnitten (53, 54) geblasen wird, auf das erste Feuchtigkeitsabscheideelement (37, 37a, 37b) und das zweite Feuchtigkeitsabscheideelement (38, 38a, 38b) verteilt.

8. Feuchtigkeitsabscheider (12, 12A, 12B, 12C, 12D) nach Anspruch 6 oder 7, wobei: der Dampfeinlassabschnitt (32) an einem unteren Abschnitt des Körpers (31) als der Dampfauslassabschnitt (33, 34) bereitgestellt ist, ein erster Dampfauslassabschnitt (33) und ein zweiter Dampfauslassabschnitt (34) so bereitgestellt sind, dass sie dem ersten Feuchtigkeitsabscheideelement (37, 37a, 37b) und dem zweiten Feuchtigkeitsabscheideelement (38, 38a, 38b) entsprechen; und ein zweites Verteilungselement (71) bereitgestellt ist, das Dampf auf den ersten Dampfauslassabschnitt (33) und den zweiten Dampfauslassabschnitt (34) verteilt, wobei aus dem Dampf durch das erste Feuchtigkeitsabscheideelement (37, 37a, 37b) und das zweite Feuchtigkeitsabscheideelement (38, 38a, 38b) Feuchtigkeit entfernt wurde.

9. Feuchtigkeitsabscheider (12, 12A, 12B, 12C, 12D) nach Anspruch 8, wobei der erste Dampfauslassabschnitt (33) an einem oberen Abschnitt des Körpers (31) bereitgestellt ist, und der zweite Dampfauslassabschnitt (34) an einem Seitenabschnitt des Körpers (31) bereitgestellt ist.

10. Feuchtigkeitsabscheider (12, 12A, 12B, 12C, 12D) nach einem der Ansprüche 1 bis 9, wobei: die Sammelleitung (35, 36) einen Endabschnitt aufweist, der geschlossen ist, und der andere Endabschnitt mit dem Dampfeinlassabschnitt (32) kommuniziert; und die mehreren Dampfausblasabschnitte (53, 54) schlitzförmig sind und Öffnungsbereiche der mehreren Dampfausblasabschnitte (53, 54) gesetzt sind, um zu dem einen Endabschnitt von der anderen Endabschnittseite zuzunehmen.

11. Dampfturbinenanlage, umfassend:
eine Turbine (13) an der Hochdruckseite;
eine Turbine (14) an der Niederdruckseite; und
den Feuchtigkeitsabscheider (12, 12A, 12B, 12C, 12D) nach einem der Ansprüche 1 bis 10, wobei der Feuchtigkeitsabscheider, der Feuchtigkeit aus dem Dampf entfernt, in der Turbine an der Hochdruckseite verwendet wird und den Dampf, aus dem Feuchtigkeit entfernt wurde, in die Turbine an der Niederdruckseite einspeist.

## Revendications

1. Séparateur d'humidité (12, 12A, 12B, 12C, 12D), comprenant :
un corps (31) qui présente une forme creuse et s'étend dans une direction horizontale ;
une partie d'entrée de vapeur (32) qui est prévue au niveau d'une partie longitudinalement intermédiaire du corps (31) ;
un collecteur (35, 36) qui communique avec la partie d'entrée de vapeur (32), et présente une pluralité de parties de soufflage de vapeur (53, 54) prévues le long d'une direction longitudinale ;
une partie de séparation d'humidité (37, 37a, 37b, 38, 38a, 38b) qui sépare l'humidité de la vapeur soufflée depuis la pluralité de parties de soufflage de vapeur (53, 54) ; et
une partie de sortie de vapeur (33, 34) qui est prévue dans le corps (31), et évacue la vapeur à partir de laquelle l'humidité a été séparée dans la partie de séparation d'humidité (37, 37a, 37b, 38, 38a, 38b) et qui s'écoule le long d'une surface de paroi intérieure du corps (31), **caractérisé en ce que**
le collecteur (35, 36) est disposé avec un espacement prédéterminé par rapport à la surface de paroi intérieure du corps (31).

2. Séparateur d'humidité (12, 12A, 12B, 12C, 12D) selon la revendication 1, dans lequel : le corps (31) présente une chambre d'introduction de vapeur dans la partie longitudinalement intermédiaire ; la partie d'entrée de vapeur (32) communique avec la chambre d'introduction de vapeur ; le collecteur (35, 36) présente une première partie de collecteur (35) et une seconde partie de collecteur (36) qui sont disposées des deux côtés de la chambre d'introduction de vapeur dans la direction longitudinale du corps (31) ; et l'une des parties d'extrémité longitudinale de chacune de la première partie de collecteur (35) et de la seconde partie de collecteur (36) communique avec la chambre d'introduction de vapeur.

3. Séparateur d'humidité (12, 12A, 12B, 12C, 12D) selon la revendication 2, dans lequel un élément tampon est prévu à l'opposé de la partie d'entrée de vapeur (32) dans la chambre d'introduction de vapeur.

4. Séparateur d'humidité (12, 12A, 12B, 12C, 12D) selon l'une quelconque des revendications 1 à 3, dans lequel le corps (31) présente une chambre de soufflage de vapeur (55, 56) prévue sur un côté plus proche de la pluralité de parties de soufflage de vapeur (53, 54), et la partie de séparation d'humidité (37, 37a, 37b, 38, 38a, 38b) fait face à la chambre de soufflage de vapeur (55, 56).

5. Séparateur d'humidité (12, 12A, 12B, 12C, 12D) selon la revendication 4, dans lequel un déflecteur est prévu en contact étroit avec la partie de séparation d'humidité (37, 37a, 37b, 38, 38a, 38b) du côté de chambre de soufflage de vapeur (55, 56) de la partie de séparation d'humidité (37, 37a, 37b, 38, 38a, 38b).

6. Séparateur d'humidité (12, 12A, 12B, 12C, 12D) selon la revendication 4 ou 5, dans lequel la partie de séparation d'humidité (37, 37a, 37b, 38, 38a, 38b) présente un premier élément de séparation d'humidité (37, 37a, 37b) et un second élément de séparation d'humidité (38, 38a, 38b) qui sont disposés à l'opposé l'un de l'autre des deux côtés de la chambre de soufflage de vapeur (55, 56) dans une direction de largeur du corps (31).

7. Séparateur d'humidité (12, 12A, 12B, 12C, 12D) selon la revendication 6, dans lequel la chambre de soufflage de vapeur (55, 56) est pourvue d'un premier élément de distribution (81) qui distribue la vapeur soufflée depuis les parties de soufflage de vapeur (53, 54), vers le premier élément de séparation d'humidité (37, 37a, 37b) et le second élément de séparation d'humidité (38, 38a, 38b).

8. Séparateur d'humidité (12, 12A, 12B, 12C, 12D) selon la revendication 6 ou 7, dans lequel : la partie d'entrée de vapeur (32) est prévue au niveau d'une partie inférieure du corps (31) ; en tant que partie de sortie de vapeur (33, 34), une première partie de sortie de vapeur (33) et une seconde partie de sortie de vapeur (34) sont prévues de manière à correspondre au premier élément de séparation d'humidité (37, 37a, 37b) et au second élément de séparation d'humidité (38, 38a, 38b) ; et un second élément de distribution (71) est prévu, lequel distribue la vapeur vers la première partie de sortie de vapeur (33) et la seconde partie de sortie de vapeur (34), l'humidité ayant été retirée de la vapeur par le premier élément de séparation d'humidité (37, 37a, 37b) et le second élément de séparation d'humidité (38, 38a, 38b).

9. Séparateur d'humidité (12, 12A, 12B, 12C, 12D) selon la revendication 8, dans lequel la première partie de sortie de vapeur (33) est prévue au niveau d'une partie supérieure du corps (31), et la seconde partie de sortie de vapeur (34) est prévue au niveau d'une partie latérale du corps (31).

10. Séparateur d'humidité (12, 12A, 12B, 12C, 12D) selon l'une quelconque des revendications 1 à 9, dans lequel : le collecteur (35, 36) présente une partie d'extrémité qui est fermée, et l'autre partie d'extrémité communiquant avec la partie d'entrée de vapeur (32) ; et la pluralité de parties de soufflage de vapeur (53, 54) sont en forme de fente, et les surfaces des ouvertures de la pluralité de parties de soufflage de vapeur (53, 54) sont définies pour croître vers l'une partie d'extrémité depuis le côté de l'autre partie d'extrémité.

11. Installation de turbine à vapeur, comprenant :
une turbine côté haute pression (13) ;
une turbine côté basse pression (14) ; et
le séparateur d'humidité (12, 12A, 12B, 12C, 12D) selon l'une quelconque des revendications 1 à 10, le séparateur d'humidité retirant l'humidité de la vapeur utilisée dans la turbine côté haute pression et alimentant la vapeur dont l'humidité a été retirée vers la turbine côté basse pression.
